# EUROPEAN PATENT APPLICATION

(11) **EP 4 456 541 A1**
(43) Date of publication of application: **30.10.2024**
(21) Application number: 22918913.9
(22) Date of filing: 04.01.2022
(51) Int. Cl.: H04N 21/485, H04N 21/462, H04N 21/466, H04N 21/422, H04N 21/4223, H04N 9/43, H04N 5/21, G06V 40/16

(54) **TV AND CONTROL METHOD THEREFOR**

(71) Applicant: LG Electronics Inc., Yeongdeungpo-gu Seoul 07336 (KR)
(72) Inventor: LEE, Jinhee, Seoul 06772 (KR); CHOI, Gowoon, Seoul 06772 (KR)
(74) Representative: Schornack, Oliver
(86) International application number: PCT/KR2022/000071
(87) International publication number: WO 2023/132376

(57) **Abstract**

According to one embodiment of the present invention, a method for controlling a TV having a screen-exposed size that changes by means of a motor comprises the steps of: displaying a monochrome video in a first view mode; displaying a color video if at least one user is sensed in the first view mode; lowering the brightness of the video if the sensing of the at least one user fails; and displaying the monochrome video again.

## Description

### TECHNICAL FIELD

The technical field of the present disclosure includes various multimedia devices having displays, etc. For example, it is applicable to a Television (TV) having a variable size of an exposed screen.

### BACKGROUND ART

In TV according to the related art, an entire area of a screen (screen) is always exposed. However, even when a user does not watch TV, there is a problem that the user may not fully utilize a space when a black screen is always exposed. Meanwhile, a service that uses only a partial area of a screen of a TV as a display is not provided.

In order to solve this problem, research is being conducted on a new form factor of TV.

### DISCLOSURE

### TECHNICAL TASKS

One technical task of the present disclosure is to provide a system that selectively allows a screen to be partially or fully exposed by using a motor or the like added to a TV.

Another technical task of the present disclosure is to provide a solution for minimizing an afterimage and a burn-in phenomenon in a TV having a variable size of an exposed screen.

### TECHNICAL SOLUTIONS

In one technical aspect of the present disclosure, provided is a method of controlling a TV with a screen having an exposed size changed by a motor, the method including displaying a video in black-and-white in a first view mode, displaying the video in color based on sensing at least one user in the first view mode, lowering a brightness of the video based on failing in sensing the at least one user, and controlling the video to be displayed in the black-and-white again.

In another technical aspect of the present disclosure, provided is a TV having a variable exposed size of a screen, the TV including a sensor configured to sense at least one user, a display configured to display a video in color based on sensing the at least one user while displaying the video in black-and-white in a first view mode, and a controller configured to lower a brightness of the video and display the video in the black-and-white again based on failing in sensing the at least one user.

### ADVANTAGEOUS EFFECTS

According to one embodiment of the present disclosure, a system for selectively allowing a screen to be partially or fully exposed using a motor or the like added to a TV is provided.

According to another embodiment of the present disclosure, there is a technical effect of minimizing an afterimage and a burn-in phenomenon in a TV having a variable size of an exposed screen.

### DESCRIPTION OF DRAWINGS

FIG. 1 is a diagram illustrating components inside a TV according to an embodiment of the present disclosure.
FIG. 2 is a diagram illustrating components inside a TV according to another embodiment of the present disclosure and an external device together.
FIG. 3 is a diagram illustrating an exterior of a TV according to an embodiment of the present disclosure.
FIG. 4 is a diagram illustrating an exterior of a TV according to another embodiment of the present disclosure.
FIG. 5 is a diagram illustrating an exterior of a TV according to further embodiment of the present disclosure.
FIG. 6 is a diagram illustrating a motor for adjusting a screen size of a TV according to an embodiment of the present disclosure.
FIG. 7 is a block diagram illustrating components of a TV according to an embodiment of the present disclosure.
FIG. 8 is a block diagram illustrating a controller shown in FIG. 7 in more detail.
FIG. 9 is a flowchart illustrating a method of controlling a TV according to an embodiment of the present disclosure.
FIG. 10 is a diagram illustrating one example of performing afterimage removal by a TV depending on a presence or non-presence of a user according to an embodiment of the present disclosure.
FIG. 11 is a diagram illustrating another example of performing afterimage removal by a TV depending on a presence or non-presence of a user according to an embodiment of the present disclosure.
FIG. 12 is a diagram illustrating further example of performing afterimage removal by a TV depending on a presence or non-presence of a user according to an embodiment of the present disclosure.
FIG. 13 is a diagram illustrating one example of a process of operating a screen saver provided by a TV according to an embodiment of the present disclosure.
FIG. 14 is a diagram illustrating another example of a process of operating a screen saver provided by a TV according to an embodiment of the present disclosure.

### BEST MODE

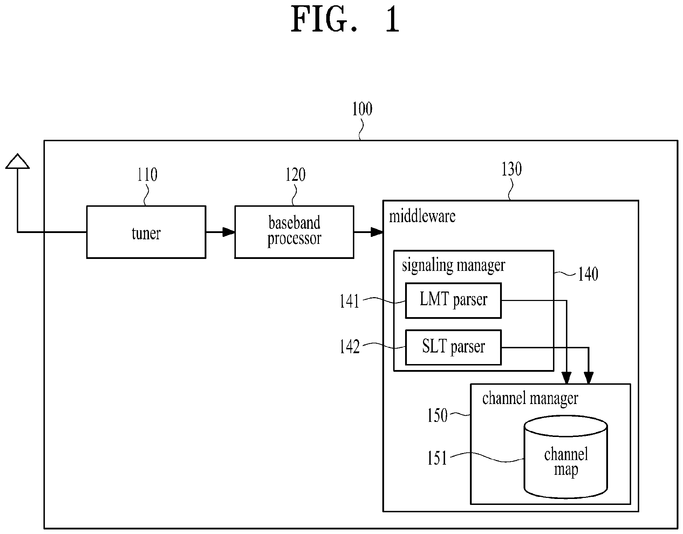

FIG. 1 is a diagram illustrating components inside a TV according to an embodiment of the present disclosure.

The present disclosure is applicable to various TV products, for example, the Digital Video Broadcasting (DVB) standard, which is a European standard, the Advanced Television Systems Committee (ATSC) 3.0 standard, which is a North American/Korean standard, etc.

In FIG. 1, a process for a TV 100 to perform and initial service scan operation in accordance with the ATSC 3.0 standard will be illustrated, but the scope of the rights of the present disclosure should be determined according to the matters described in the claims.

A tuner 110 determines whether a signal is present by using a predefined frequency list. If a signal is detected at a given frequency, a baseband processor 120 extracts L1 signaling of a preamble.

Furthermore, the baseband processor 120 transmits Physical Layer Pipe (PLP) data including link layer signaling and Low Level Signaling (LLS) to a middleware 130, and the middleware 130 may extract the link layer signaling and the LLS from the PLP data.

Meanwhile, the middleware 130 includes a signaling manager 140 and a channel manager 150.

The middleware 130 receives the PLP data including the link layer signaling and the LLS from the baseband processor 120 and passes the data to an appropriate parser.

For example, the middleware 130 extracts Link Mapping Table (LMT) from the link layer signaling and passes the LMT to an LMT parser 141. Furthermore, the middleware 130 extracts Service List Table (SLT) from the LLS and passes the SLT to an SLT parser 142.

The LMT parser 141 parses the LMT and extracts first information (e.g., PLPID, session information (IP address and port number), etc.) necessary to generate a channel map.

The SLT parser 142 parses the SLT and extracts second information (e.g., service id, service name, etc.) necessary to generate the channel map.

The extracted first information and second information are stored in a channel map 151.

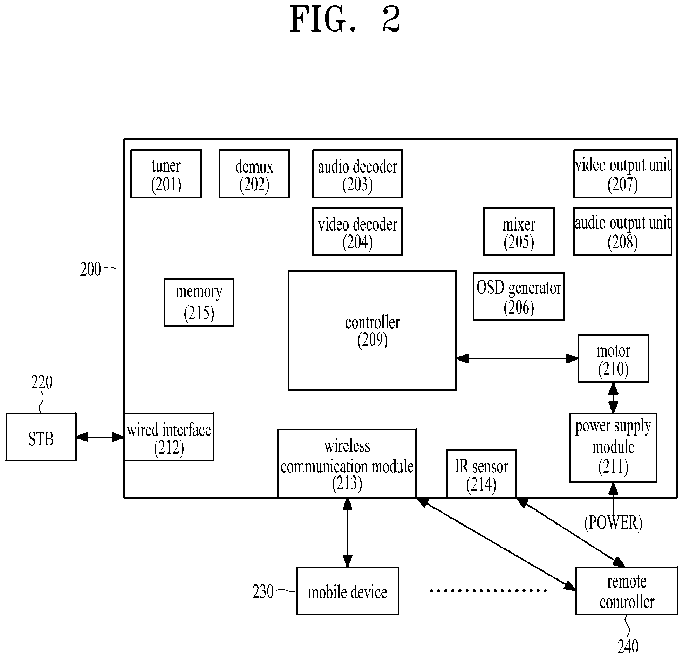

FIG. 2 shows components inside a TV and an external device according to another embodiment of the present disclosure. Those skilled in the art may implement the present disclosure by combining some components with reference to FIGS. 1 and 2. For example, the baseband processor 120 and the middleware 130 shown in FIG. 1 may be included in a controller 209 shown in FIG. 2.

Although a TV 200 shown in FIG. 2 includes various components, the scope of the rights of the present disclosure is not limited thereto and should be determined according to the matters described in the claims.

Moreover, the components inside the TV 200 shown in FIG. 2 may be controlled through the controller 209, and each of the components may be directly or indirectly connected thereto. That is, although not shown in FIG. 2, all of the components inside the TV 200 of FIG. 2 are designed to directly or indirectly transmit and receive control signals and/or data.

First, a tuner 201 receives a broadcast signal through an antenna or the like, and a demuxer (demux or demultiplexer) 202 demultiplexes audio data and video data included in the broadcast signal.

An audio decoder 203 decodes the audio data (in encoded state) included in the broadcast signal, and a video decoder 204 decodes the video data (in encoded state) included in the broadcast signal.

The decoded audio data is outputted through an audio output unit 207. The audio output unit 207 may be, for example, a speaker attached to or spaced apart from the TV 200.

Meanwhile, the decoded video data is directly outputted through a video output unit 208. Alternatively, a mixer 205 mixes menu data generated by an OSD generating unit 206 and the video data and then transmits the mixed menu data to the video output unit 208.

A memory 215 stores various control data and commands for controlling the TV 200, and the controller 209 may control all components in the TV with reference to the memory 215.

Furthermore, the TV 200 transmits and receives data through communication with various peripheral external devices. For example, video and audio data are received from an STB 220 via a wired interface 212, and then processed by the audio decoder 203 and the video decoder 204, respectively. Alternatively, the received video and audio data may be directly outputted through the audio output unit 207 and the video output unit 208 without passing through the decoders 203 and 204.

Various data is transmitted and received with a mobile device 230 (e.g., a mobile phone, a wearable device, etc.) via a wireless communication module 213, and an infrared (IR) signal of a remote controller 240 is received through an infrared sensor 214. Alternatively, the remote controller 240 capable of Bluetooth communication such as BT transmits and receives various data to and from the TV via the wireless communication module 213.

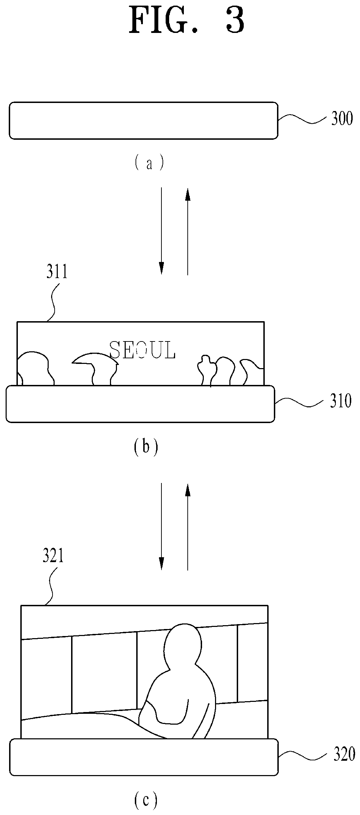

Unlike the related art TV, the TV 200 according to an embodiment of the present disclosure further includes a motor 210 inside or outside the TV 200. Therefore, it becomes possible to freely control an exposed area of a screen of the TV 200 using the motor 210 (more specific embodiments related to this will be described in detail in FIGs. 3 to 6 below). On the other hand, the related art TV has a problem in that a full screen of the same size is always exposed.

According to an embodiment of the present disclosure, unlike the related art, since power needs to be additionally supplied to the motor 210 through a power supply module 211, a technology that minimizes power consumption by optimizing the control of the motor is important. And, it is required as a very important interface technology to specifically define what kind of information is supposed to be displayed depending on an exposed area of a TV screen. As mentioned above, the related art TV does not need to review the above technical requirements because a full screen of the same size is always exposed.

FIG. 3 illustrates an exterior of a TV according to an embodiment of the present disclosure.

Unlike the related art, the screen of the TV according to an embodiment of the present disclosure may be included in the housing 300, as shown in (a) of FIG. 3. When a certain condition is satisfied (for example, when a signal pressing a power button of a remote controller once is input), as shown in (b) of FIG. 3, only a partial screen 311 of the TV may be exposed from the housing 310. When another certain condition is satisfied (for example, when a signal pressing the power button of the remote controller twice is input), as illustrated in (c) of FIG. 3, an entire screen 321 of the TV may be designed to be exposed from the housing 320. Needless to say, a mode in (c) of FIG. 3 may be switched to a mode in (b) and a mode in (a) in a reverse direction, and the mode in (b) may be skipped.

To implement this, the screen 321 of the TV may include a material for forming a flexible display. For example, a bendable or rollable flexible display material may be for a plastic OLED (POLED or P-OLED), and may be finished with a colorless polyimide (CPI) film, which is a plastic material. Here, the CPI film is for a transparent but rigid plastic material like glass, may freely change a shape, and may not easily break even a pressure is applied..

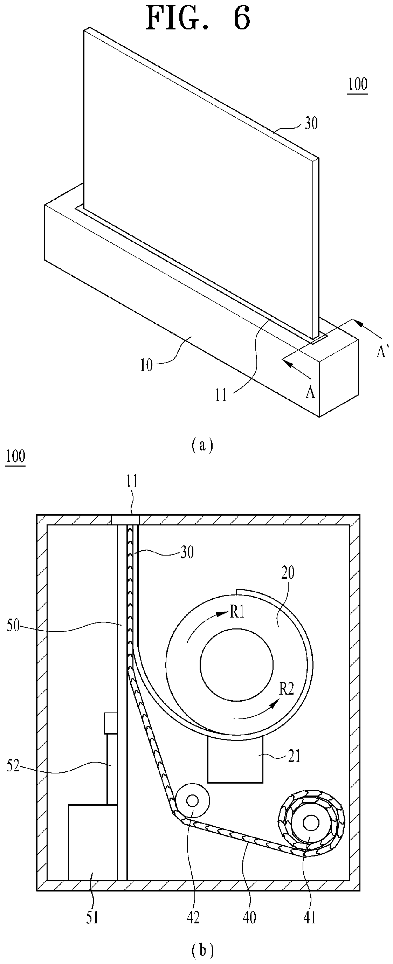

The screen 321 may be wound around rollers inside the housing 320 and then unfolded, and a motor for driving the rollers may be required. This will be described below in more detail with reference to FIG. 6.

To be distinguished from the related art, a TV designed as shown in FIG. 3 may be defined as a rollable TV or a flexible TV, a mode illustrated in (a) of FIG. 3 may be defined as a zero view, a mode illustrated in (b) of FIG. 3 may be defined as a partial view, and a mode illustrated in (c) of FIG. 3 may be defined as a full view.

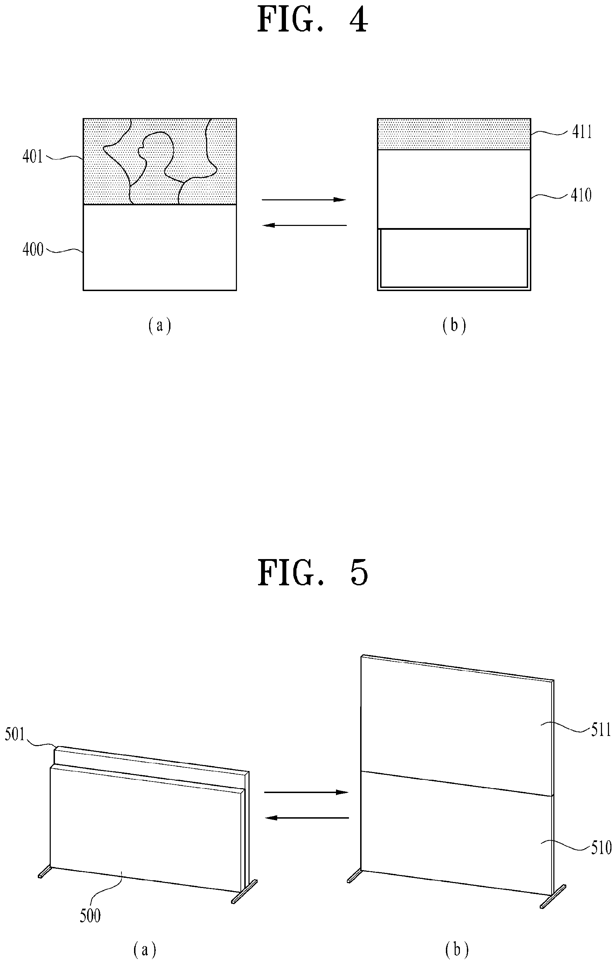

FIG. 4 is a diagram illustrating an exterior of a TV according to another embodiment of the present disclosure.

Although it has been described with reference to FIG. 3 that a flexible display material is used for a screen of the TV, the TV may not necessarily include a material for a flexible display, and a screen of a general TV may be used without change in the embodiment of FIG. 4.

However, differently from the related art, as shown in (a) of FIG. 4, covers 400 having the same size or similar sizes may be positioned under the screen 401 of the TV. When a certain condition is satisfied (for example, when a signal pressing a power button of a remote controller once is input), as shown in (b) of FIG. 4, a cover 410 may be designed to move in an up direction to expose only a partial TV screen 411. Needless to say, a mode in (a) of FIG. 4 may be switched to a mode shown in (a) of FIG. 4. To freely move the cover shown in FIG. 4 in an up/down direction, a motor may be designed to be positioned around the cover.

To be distinguished from the related art, the TV designed as shown in FIG. 4 may be defined as an Atelier TV, a mode illustrated in (a) of FIG. 4 may be defined as a full view, and a mode illustrated in (b) of FIG. 4 may be defined as a line view or a partial view.

FIG. 5 is a diagram illustrating an exterior of a TV according to further embodiment of the present disclosure.

Similar to FIG. 4, a material for a flexible display may not necessarily be used as a TV screen, and a general display may be used without change. However, differently from FIG. 4, the TV screen other than a cover itself is moved.

For example, as shown in (a) of FIG. 5, the cover 500 having the same size or similar sizes is designed to be positioned under the TV screen 501. The TV screen 501 and the cover 500 may be apart from each other at a certain interval to prevent friction from being generated. When a certain condition is satisfied (for example, when a signal pressing a power button of the remote controller once is input), as illustrated in (b) of FIG. 5, the TV screen 511 may move in an up direction to design the entire TV screen 511 to be exposed. In this case, differently from FIG. 4, a cover 510 may not move.

Needless to say, in a mode of (b) of FIG. 5 may be switched to a mode of (a) of FIG. 5. To freely move the TV screen shown in FIG. 5 in an up/down direction, a motor may be designed around the TV screen
To be distinguished from the related art, a TV designed as shown in FIG. 5 may be defined as an interior TV, a mode illustrated in (a) of FIG. 5 may be defined as a partial view or a line view, and a mode illustrated in (b) of FIG. 5 may be defined as a full view.

FIG. 6 is a diagram for explaining a motor for adjusting a screen size of a TV according to an embodiment of the present disclosure.

Although the motor is applicable to the embodiments of FIGS. 4 and 5, it is assumed that the motor is applied to the TV of FIG. 3 for convenience of description, and FIG. 6 will be described.

(a) of FIG. 6 illustrates a screen of the housing and the TV screen shown in FIG. 3 in a diagonal direction, (b) of FIG. 6 is a cross-sectional view taken along a line A-A' of (a) of FIG. 6.

As shown in (a) of FIG. 6, the TV system 100 may further include the housing 10.

The housing 10 may be configured to accommodate various components, and more particularly, the housing 10 may accommodate, for example, the screen 30 and various electronic components for operating the screen 30.

As shown in (b) of FIG. 6, the TV system 100 may include the roller 20 rotatably installed in the housing 10. Although not shown, the roller 20 may include sleeves formed at both ends, and the sleeves may be rotatably supported with respect to the housing 10 by bearings.

The roller 20 may be connected to the motor 21 installed in the housing 10, and may rotate in a clockwise direction R1 or a counterclockwise direction R2 as illustrated by the motor 21. To adjust a rotation speed of the roller 20, a gear train may be located between the motor 21 and the roller 20.

The TV system 100 may include the screen 30 configured to display various contents and information related to the contents. For example, the screen 30 may display video content, audio content, and other ancillary content. Such contents include various pieces of information associated thereto, for example, a playback time in a video content, a title of the content, and the like, and the display 30 may also display such relevant information.

The screen 30 may be accommodated in the housing 10 as illustrated in such a manner that the TV system 100 may have a compact structure. To accommodate the screen 30 in the housing 10, the screen 30 needs to be basically deformed. Accordingly, the TV system 100 may use a flexible display as the screen 30.

Due to this deformable property, as shown in (b) of FIG. 6, the screen 30 may be rolled on the roller 20. The screen 30 may be wound around the roller 20 or unwound from the roller 20 according to a rotation direction of the roller 20. The screen 30 may be unwound from the roller 20 and project or roll out to the outside of the housing 10. On the contrary, the screen 30 may be wound around the roller 20 to retract/roll in the housing 10. In detail, as shown in (b) of FIG. 6, when the roller 20 rotates in a clockwise direction R1, the screen 30 may be unwound from the roller 20 and be expanded to the outside of the housing 10 through an opening 11 formed in the housing 10.

Therefore, as described above, a screen accommodated in the housing 300 in (a) of FIG. 3 may be extended to the outside of the housing 310 as shown in (b) of FIG. 3, and a screen 311 having a certain size may be formed. When the roller 20 further rotates in the clockwise direction R1, the screen 30 may be further unwound from the roller 20. Therefore, as shown in (c) of FIG. 3, the screen may protrude to a larger size outside the housing 10, and may form a screen of a larger size. When the roller 20 rotates in the counterclockwise direction R1, the screen 30 may be wound around the roller 20 and may be contracted into the housing 10 through the opening 11. Accordingly, as shown in (b) of FIG. 3, the screen 321 of (c) of FIG. 3 may be contracted to have a relatively smaller size inside the housing 310, thereby forming a smaller screen. When the roller 20 further rotates counterclockwise R2, the screen 30 may be further wound around the roller 20. Therefore, as shown in (a) of FIG. 3, the screen may not protrude to the outside of the housing 300, and may be completely accommodated in the housing 300.

A front portion of the screen 30, which is expanded from the TV system 100, may be protected by the window, while a rear portion of the screen 30 may be exposed. The screen 30 includes sensitive electronic components and substrates, and thus the screen 30 needs to be properly protected to prevent malfunction. Accordingly, as illustrated in (b) of FIG. 6, the TV system 100 may include the cover 40 configured to cover the rear portion of the extended screen 30.

The cover 40 may include a plurality of links connected to each other. The link may have a width corresponding to a width of the screen 30, and the links connected to each other, that is, the cover 40, may form a single plate covering the rear portion of the screen 30. Any one of the links is pivotable with respect to another adjacent link, and thus as shown in the drawing, the cover 40 may be wound around a first roller 41 and may be guided to a rear side of the screen 30 by the second roller 42.

When the screen 30 is expanded during an operation of the TV system 100, the first roller 41 may rotate to unwind the cover 40. The unwound cover 40 is guided by the second roller 41 and is attached to the rear portion of the screen 30. Accordingly, the cover 40 may be extended to the outside of the housing 10 together with the screen 30 to protect the rear portion of the screen 30.

When the screen 30 is contracted, the first roller 41 may rotate in an opposite direction to separate the cover 40 from the screen 30, and the separated cover 40 may be guided by the second roller 42 to be wound around the first roller 41. In the cover 40, the first roller 41 may be driven by the motor 21 together with the roller 20, and a separate motor for driving the first roller 41 may be installed in the housing 10.

The screen 30 may be difficult to maintain an expanded state due to the flexibility thereof. Accordingly, the TV system 100 may include the supporter 50 configured to support the extended screen 30. The supporter 50 may be extended to the outside of the housing 10 through the opening 11 by the motor 51 and the auxiliary supporter 52 connected thereto. Accordingly, the supporter 50 may be extended to the outside of the housing 10 together with the screen 30. Accordingly, the screen 30 expanded by the supporter 50 may be stably supported to display content to the user.

As a screen used in FIGs. 1 to 6, for example, an OLED display may be used. The OLED display has many advantages such as a free form factor, infinite contrast ratio, spontaneous light emission, color representation close to natural color, and the like.

The OLED display has a TFT switch under an organic material to turn on/off a device. A voltage is applied to the TFT switch to turn on/off, and intensity of light is adjusted by controlling an amount of a current.

In this case, when the voltage and the current are maintained for a long time, heat is generated from the switch to affect the organic matter. Accordingly, brightness and color reproduction are gradually degraded as time flows, and there may occur a phenomenon in which an afterimage is left due to dead devices (pixel).

For example, since the lifetime of blue color is the shortest, there is a problem that a screen is gradually changed in yellow when an OLED product is used for a long time.

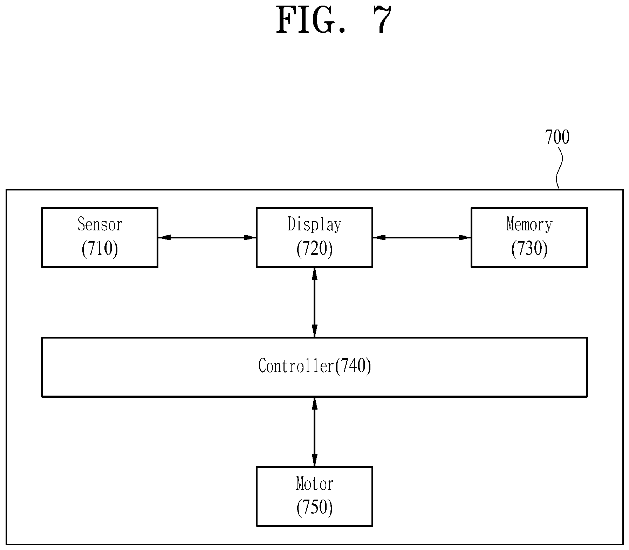

Various methods for solving the problem will now be described with reference to FIG. 7. Of course, the present disclosure is not necessarily limited to an OLED display, and is applicable to other devices as well.

The following TV form factor is exemplarily described with reference to FIG. 5, but the present disclosure may be applied to all TV products having a variable size of an exposed screen.

FIG. 7 is a block diagram illustrating components of a TV according to an embodiment of the present disclosure.

As shown in FIG. 7, a TV 700 according to an embodiment of the present disclosure includes a sensor 710, a display 720, a memory 730, a controller 740, a motor 750, etc. Of course, it is within another scope of the present disclosure to delete, modify, and add some components as needed by those skilled in the art.

The sensor 710 is designed to detect whether at least one user exists around the TV 700. The sensor 710 may include, for example, a camera, an IR infrared sensor, etc.

When at least one user is sensed while displaying a video in black and white in a first view mode, the display 720 displays the video in color.

The first view mode includes, for example, a case that only a screen is exposed partially and correspond, for example, to the state (a) of FIG. 5.

When the sensing of the at least one user fails, the controller 740 reduces brightness of the video and controls the video to be displayed in black and white again.

In particular, since it is expected that a change of the video will not be large in the first view mode, there is a technical effect in solving a problem that an afterimage or burn-in effect occurs on the screen of OLED and the like owing to the above-described design.

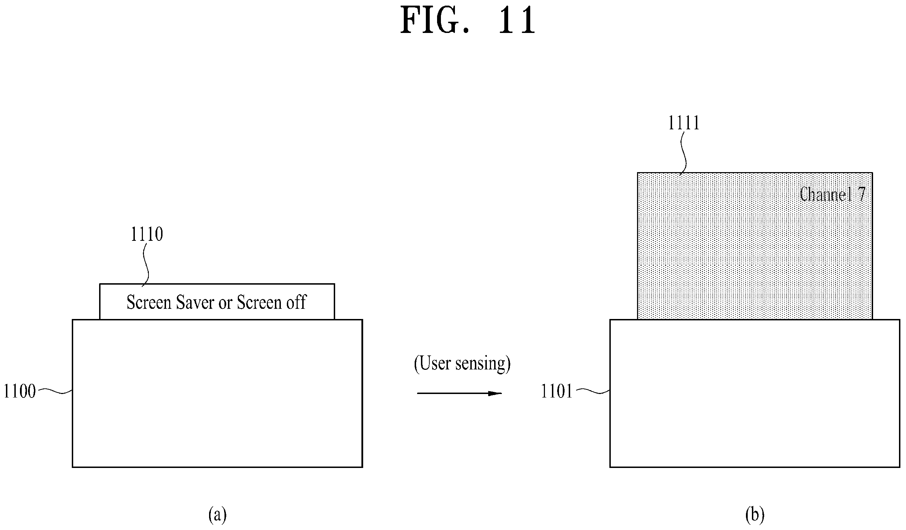

If the at least one user is consecutively sensed, the motor 750 adjusts the screen to switch from the first view mode to a second view mode (described in more detail later with reference to FIG. 11). Meanwhile, the driving of the motor is described in more detail with reference to FIG. 6, and thus a redundant description will be omitted.

The second view mode includes, for example, a case where the screen is fully exposed, and corresponds to, for example, the state (b) of FIG. 5.

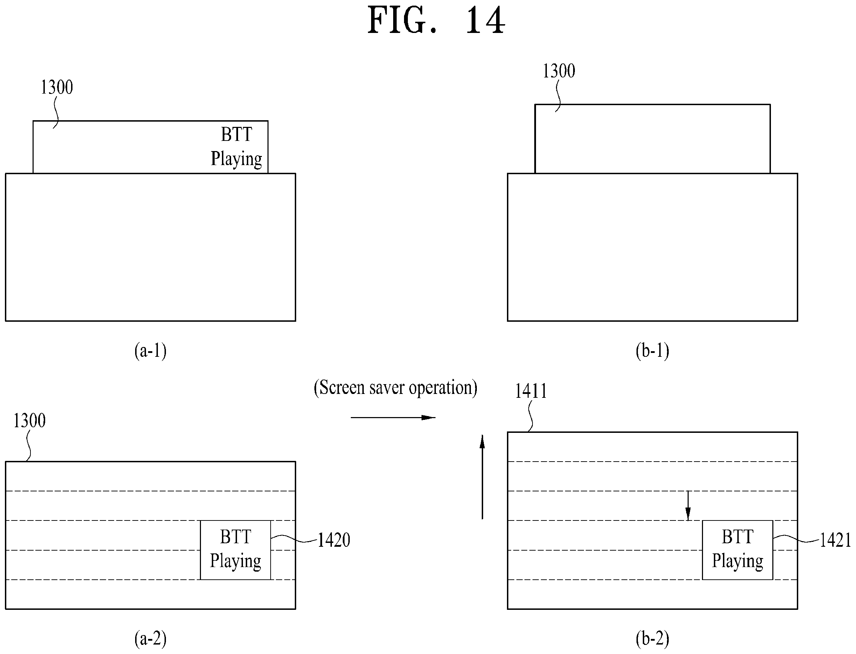

Furthermore, according to an embodiment of the present disclosure, in the first view mode described above, the controller 740 additionally controls the motor 750 to adjust an exposed size of the screen, and adjusts the position of the video displayed on the screen. Regarding this, a more specific embodiment will be described in detail with reference to FIG. 14.

In addition, according to an embodiment of the present disclosure, unlike the related art, the controller 740 is designed to separately count a use time in the first view mode and a use time in the second view mode. In particular, a reference time for performing afterimage compensation in the first view mode is designed to be shorter than a reference time for performing afterimage compensation in the second view mode.

Therefore, based on the same use time, there is a technical effect in operating the afterimage compensation algorithm more quickly in the first view mode.

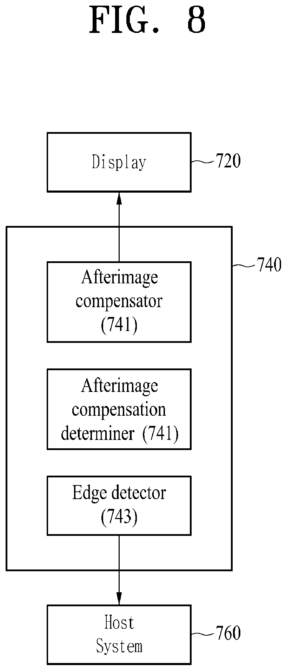

A more detailed embodiment in which the controller performs afterimage compensation is described below with reference to FIG. 8.

FIG. 8 is a block diagram illustrating the controller shown in FIG. 7 in more detail.

The display 720 is configured to display a video and includes a display panel having pixels to display the video image, a data driver for driving a data line, and a gate driver for driving a gate line. The display 720 may include, for example, an Organic Light Emitting Diodes (OLED) display.

The controller 740 receives various control signals such as power, image data, a timing signal, and the like from a host system 760, which will be described later, and controls an operation of the display 720 based on the received control signals.

The controller 740 captures an image inputted from the host system 760 to detect an edge, determines an afterimage compensation target pixel based on edge strength, brightness, edge accumulation count value, and the like for each pixel, and performs afterimage compensation on the afterimage compensation target pixel.

The controller 740 may include a memory storing an edge detection algorithm, an algorithm for detecting an afterimage area, a data table, a control algorithm, and a control code therein and a processor for executing the algorithms. In this case, the controller 740 may be provided in a timing controller.

As shown in FIG. 8, the controller 740 includes an edge detector 743, an afterimage compensation determiner 742, and an afterimage compensator 741.

The edge detector 743 captures an input image frame at a predetermined period and detects an edge area from the captured image frame. Here, the image capture and edge detection period may be determined to be between 15 seconds and 45 seconds.

Yet, the image capture and edge detection period may be set shorter (e.g. 20 seconds or less) in the first view mode, and the image capture and edge detection period may be set longer (e.g. 30 seconds or more) in the second view mode. This is a designed to consider that a burn-in phenomenon is more likely to occur in the first view mode.

The edge detector 743 detects an edge area when a brightness change value between pixels for each area of the image frame is equal to or greater than a reference value. The edge detector 743 may be implemented as any one of various algorithms to which a method of using a mask having a fixed value, such as Roberts, Sobel, Prewitt, and Laplacian, a morphology method for accessing and processing an image in morphological aspect, a method for detecting a Canny edge, and the like are applied. For example, when there is a brightness difference between a pixel and a peripheral pixel ranges between 35% ~ 45% or more, it may be detected as an edge area..

A memory (not shown) in which a data table related to the edge area is stored is provided, and the data table related to the edge area stores an edge strength, an image brightness (e.g. WRGB brightness), and an edge accumulation count value for each pixel coordinates.

The edge detector 743 saves result values, for example, the edge strength, the image brightness, and the edge accumulation count value in the data table related to the edge area based on the result of the edge area detection.

In this case, the edge strength and the image brightness mean the accumulated average value, and the edge accumulation count value refers to the number of times accumulated as the edge. If the corresponding pixel is not consecutively detected as the edge area, the corresponding edge accumulation count value is reset.

The afterimage compensation determiner 742 detects a pixel, which has been detected as an edge area consecutively by a predetermined count value or more by the edge detector 743, as an afterimage compensation area, and determines a pixel, of which accumulation count value detected as the afterimage compensation area is equal to or greater than a predetermined threshold value, as an afterimage compensation target pixel. A memory (not shown) in which a data table related to the afterimage compensation area is stored is provided, and the data table related to the afterimage compensation area stores edge strength, image brightness (e.g. WRGB brightness), and afterimage compensation area accumulation count value for each pixel.

When an edge accumulation count value of a pixel detected as an edge area is equal to or greater than a first threshold, e.g., n times in the edge area related data table, the afterimage compensation detector 742 may detect the pixel as an afterimage compensation area and update the edge strength, the image brightness (e.g. WRGB brightness), and the afterimage compensation area accumulation count value on coordinates of the corresponding pixel in the data table related to the afterimage compensation area.

For example, when edge accumulation count value in the edge area related data table is 20 or more, the afterimage compensation determiner 742 detects a corresponding pixel as an afterimage compensation area, turns on an afterimage compensation area flag, and updates an afterimage compensation area value related to the corresponding pixel coordinates in the data table related to the afterimage compensation area. If the edge detection period is 30 seconds, the edge accumulation count value '20' means that, when a still image having the same edge is displayed in a corresponding area for 30 * 20 (= 600) seconds, i.e., 10 minutes, is determined as an afterimage compensation area.

In this case, the afterimage compensation determiner 742 stores an accumulated average value of the edge strength and the image brightness of the corresponding pixel in the data table related to the afterimage compensation area, and stores the afterimage area accumulation count value by accumulating the afterimage area counting number. For example, when the accumulation count value of a pixel at the coordinates (200, 199( is counted to 20, the afterimage compensation determiner 742 accumulates 1 in the afterimage compensation accumulation count value of the coordinates (200, 199) in the data table of the afterimage compensation area and resets the edge accumulation count value of the data table about the edge area.

The afterimage compensation determiner 742 determines a pixel, of which afterimage area accumulation count value is equal to or greater than a second threshold, e.g., m times or more, as an afterimage compensation target pixel,. Here, 'm' may be determined in consideration of an afterimage characteristic and the like of the display 720 .

In particular, according to an embodiment of the present disclosure, a weight is given to a time T1 used in the first view mode, and thus it is designed to determine an afterimage compensation ahead of a time T2 used in the second view mode.

The afterimage compensator 741 performs afterimage compensation on the pixel, of which afterimage compensation enable flag is turned on, as determined as the afterimage compensation target pixel by afterimage compensation determiner 742.

When a power of the TV is turned off, the afterimage compensator 741 performs afterimage compensation on the pixel of which afterimage compensation enable flag is turned on. Of course, an afterimage compensation algorithm may operate in response to a user request, and may be designed so that an afterimage compensation algorithm is applied to all pixels other than a specific pixel, which comes within the scope of rights of the present disclosure.

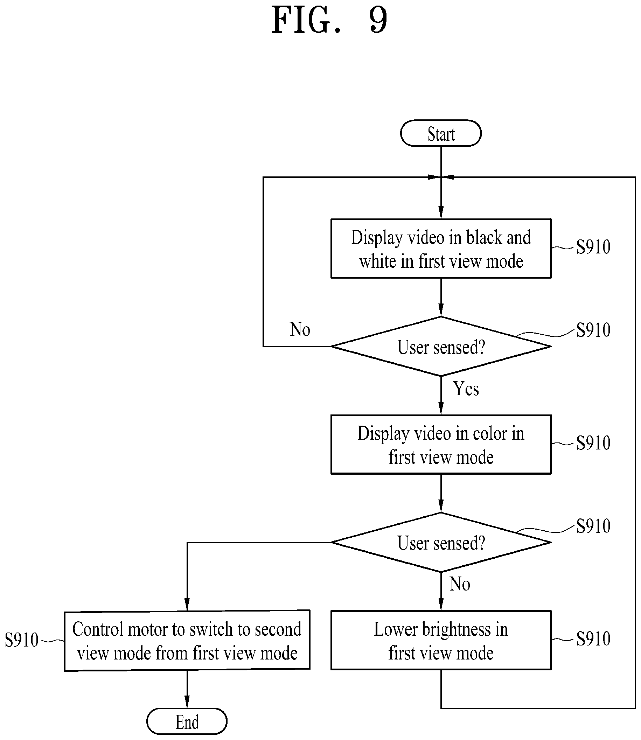

FIG. 9 is a flowchart illustrating a method of controlling a TV according to an embodiment of the present disclosure.

A TV according to an embodiment of the present disclosure is designed to display a video in black and white in a first view mode (S 910).

During operation in the first view mode, it is determined whether at least one user is detected by a sensor (e.g. a camera, an IR sensor, etc.) attached to the TV (S 920).

As a result of the determination (S 920), when the at least one user is sensed in the first view mode, the TV according to an embodiment of the present disclosure displays the video in color (S 930). Therefore, there is an advantage in that not only a function of communicating with a user can be provided, but also an afterimage or burn-in problem of a screen may be blocked in advance.

For example, after elapse of 15 seconds or more, the sensor determines again whether the at least one user is detected again (S 940).

As a result of the determination (S 940), when the sensing of the at least one user fails, the TV lowers brightness of the video (S 950) and returns to the step S 910.

On the contrary, as a result of the determination (S 940), if the sensing of the at least one user is still valid, the motor is controlled to be switched from the first view mode to a second view mode (S 960). For example, if the user is detected for 15 seconds or more, it is estimated that the user has an intention to use a content as a full screen.

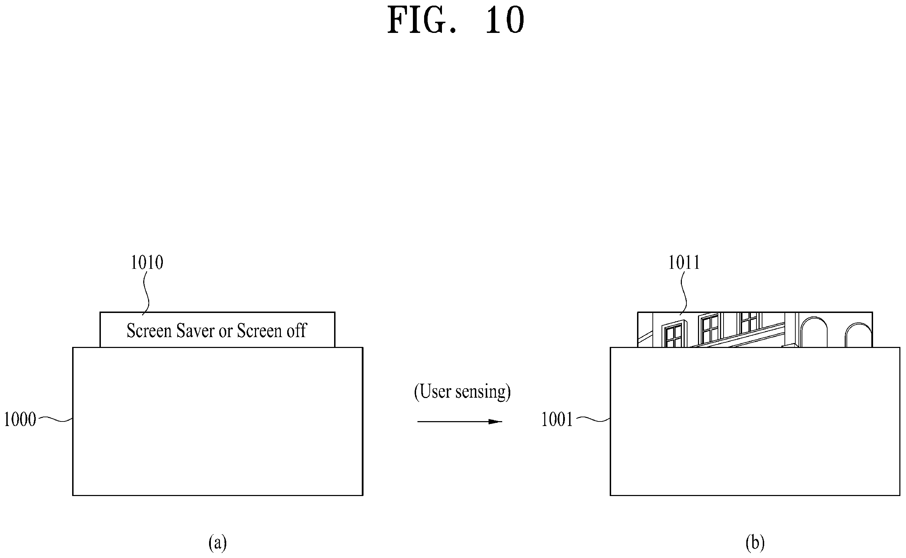

FIG. 10 illustrates an example of performing afterimage removal by a TV depending on whether a user is present according to an embodiment of the present disclosure.

As shown in FIG. 10 (a), a TV 1000 according to an embodiment of the present disclosure exposes only a portion of a screen 1010 in a first view mode. In doing so, the TV 100 displays a video on the screen 1010 in black and white so as to minimize an afterimage problem.

Furthermore, when a user is detected by a sensor (not shown) added to the TV 1000, as shown in FIG. 10 (b), the TV 10010 changes the video displayed on the screen 1011 to a color video. Accordingly, there is a technical effect of minimizing the afterimage problem and the burn-in phenomenon while minimizing a change in a current screen (i.e., maintaining the same video content).

FIG. 11 illustrates another example of performing afterimage removal by a TV depending on a presence or non-presence of a user according to an embodiment of the present disclosure.

As shown in FIG. 11 (*a*), a TV 1100 according to an embodiment of the present disclosure exposes only a portion of a screen 1110 in a first view mode. In doing so, in order to minimize the afterimage problem, the TV 1100 displays a video in black and white on the screen 1110.

Furthermore, when a user is detected by a sensor (not shown) added to the TV 1100, as shown in FIG. 11 (*b*), the TV 1101 exposes the screen 1111 to the maximum value while switching to a second view mode.

A user sensing time of being triggered from (a) to (b) of FIG. 10 is designed to a case of satisfying, for example, T1(2-3) seconds, whereas a user sensing time of being triggered from (a) to (*b*) of FIG. 11 is designed to a case of satisfying, for example, T2 (5-6) seconds. That is, T2 is designed to be larger than T1, but the scope of rights of the present disclosure is not limited to the illustrated numerical values.

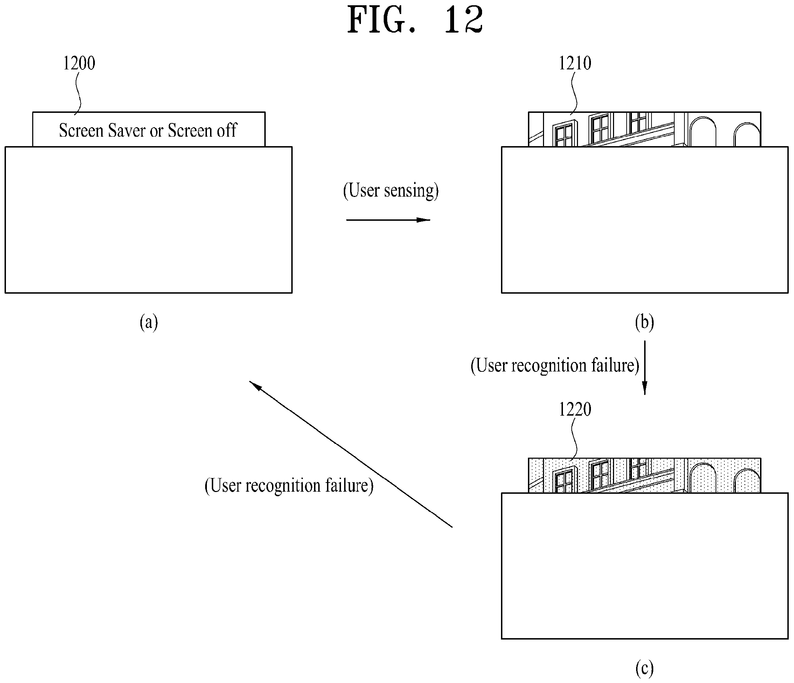

FIG. 12 illustrates another example of performing afterimage removal by a TV depending on a presence or non-presence of a user according to an embodiment of the present disclosure. Unlike FIG. 11, FIG. 12 illustrates s a technique for a solution for performing afterimage removal without switching a view mode.

For example, as shown in FIG. 12 (*a*), a TV according to an embodiment of the present disclosure exposes only a portion of a screen 1200 in a first view mode. In doing so, in order to minimize the afterimage problem, the TV displays a video in black and white on the screen 1200.

Furthermore, when a user is detected by a sensor (not shown) added to the TV 1200, as shown in FIG. 12 (*b*), the TV displays the same video in color on the screen 1210 while maintaining the first view mode.

On the other hand, if the user is not detected again for 15 minutes after the user has been detected initially, as shown in FIG. 12 (*c*), the TV displays the same video on the screen 1220 and gradually lowers a brightness level.

If the user is not detected again for 15 minutes, the same video is displayed in black and white as shown in FIG. 12 (*a*).

Therefore, when a user is absent, there is no need to unnecessarily output a video in color, and a technical effect of resolving a screen afterimage or burn-in phenomenon while outputting the same video is expected.

FIGs. 10 to 12 illustrate the methods of resolving the burn-in phenomenon by switching a black-and-white/color format while outputting the same video.

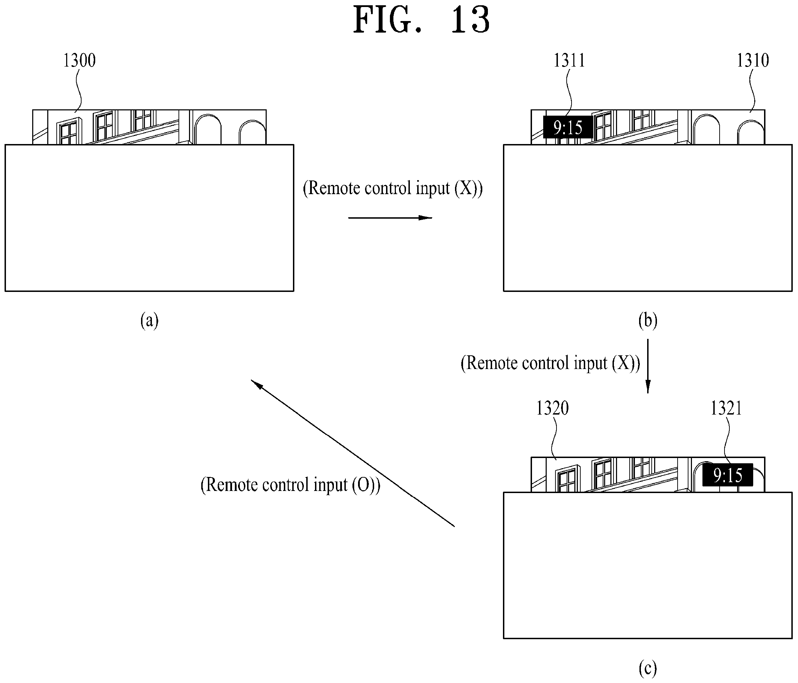

Hereinafter, an embodiment of operating as a screen saver operates by generating and displaying a separate video content will be described with reference to FIG. 13.

FIG. 13 illustrates an example of a process of operating a screen saver provided by a TV according to an embodiment of the present disclosure.

As shown in FIG. 13 (*a*), in a first view mode, that is, in a state that only a portion of a screen 1300 is exposed, a video in color is displayed. Of course, it is also within the scope of rights of the present disclosure to display a video in black and white.

If there is no remote controller input (e.g., for 10 minutes or more), as shown in FIG. 13 (*b*), an item 1311 operating as a screen saver is displayed on the screen 1310 of the TV. Although the item indicating time is illustrated in the drawing, the scope of rights of the present disclosure is not necessarily limited thereto.

Further, if there is no remote controller input (e.g., for 20 minutes or more), as shown in FIG. 13 (*c*), the item 1321 is controlled to be displayed at another location within the screen 1320 of the TV. That is, during the screen saver operation, the item 1321 randomly moves and, although not shown in the drawing, a size or color thereof may be changed.

When the TV receives a remote controller input, the TV returns to the screen 1300 of FIG. 13 (*a*) and the previous item 1311/1321 disappears. In this case, it is designed in consideration of a fact that possibility of continuing to display the same video on the screen is lowered through a signal inputted by a user through the remote controller.

FIG. 14 illustrates another example of an operation process of a screen saver provided by a TV according to an embodiment of the present disclosure. Although it is considered in FIG. 13 that a separate item is generated and displayed in order to operate as a screen saver, FIG. 14 shows an advantage in that there is no need to generate a separate item. Particularly, according to this embodiment, in case of a TV to which the present disclosure is applied, a screen is movable.

First, as shown in FIG. 14 (*a*-1), it is assumed that only a portion of a screen 1400 is exposed in a first view mode. Even when a music file is being played in the first view mode, relevant music information is displayed within the screen 1400. In particular, unlike a second view mode, since there is a high possibility of a video change in the first view mode, a solution for solving this problem is necessarily required.

FIG. 14 (*a*-2) is an enlarged view of the screen 1400 shown in FIG. 14 (*a*-1).

As shown in FIG. 14 (*a*-2), information 1420 related to a currently played music is displayed at a specific location on a screen 1410 of a TV according to an embodiment of the present disclosure.

If a user input (e.g., a remote controller command, etc.) is not received in the first view mode, the TV according to an embodiment of the present disclosure is designed to enable a screen saver to be automatically operated. For example, when the remote controller command is not received for 30 minutes to 1 hour in the first view mode, the screen saver is automatically operated.

When the screen saver is triggered, as shown in FIG. 14 (*b-*1), the screen 1401 of the TV according to an embodiment of the present disclosure is slightly further exposed in an up-direction. Only the screen 1401 shown in FIG. 14 (*b*-1) is enlarged and illustrated in FIG. 14 (*b*-2).

Comparing FIG. 14 (*a*-2) and FIG. 14 (*b*-2) with each other, the screen 1411 moves in the up-direction to have a larger exposed size. In this case, the music-related information 1421 is designed to move in a down-direction within the screen 1411.

That is, when the direction in which the screen 1411 moves and the direction in which the information 1421 moves are opposite to each other, but the moving distances are designed to be the same, and thus it is recognized that the information 1421 is displayed at the same position in the viewpoint of a user. Furthermore, according to this design, the actual position at which the information 1421 is displayed is slightly changed, thereby being advantageous in solving the afterimage problem.

The present disclosure may be embodied as a computer-readable code on a medium in which a program is recorded. The computer-readable medium includes all kinds of recording devices for storing data that can be read by a computer system. Examples of the computer readable medium include Hard Disk Drive (HDD), Solid State Disk (SSD), Silicon Disk Drive (SDD), ROM, RAM, CD- ROM, magnetic tape, floppy disk, optical data storage device, and the like and may also be implemented in the form of carrier waves (e.g. transmission over the Internet). The computer may also include a controller. Accordingly, the foregoing detailed description should not be construed as being limited in all respects and should be considered to be illustrative. The scope of the present disclosure should be determined by the reasonable interpretation of the appended claims, and all changes within the equivalent scope of the present disclosure are included in the scope of the present disclosure.

### MODE FOR DISCLOSURE

Various embodiments of the present disclosure have been described in "Best Mode " which is the previous content, and it should be appreciated to combine the embodiments described in two or more figures by those skilled in the art as needed belongs to the scope of the present disclosure.

### INDUSTRIAL APPLICABILITY

The present disclosure is applicable to TVs of various form factors such as a rollable TV and the like, and thus is industrially applicable.

## Claims

1. A method of controlling a TV with a screen having an exposed size changed by a motor, the method comprising:
displaying a video in black-and-white in a first view mode;
displaying the video in color based on sensing at least one user in the first view mode;
lowering a brightness of the video based on failing in sensing the at least one user; and
controlling the video to be displayed in the black-and-white again.

2. The method of claim 1, further comprising controlling the motor to change the first view mode to a second view mode based on consecutively sensing the at least one user.

3. The method of claim 2, wherein the first view mode includes a case of partially exposing the screen and wherein the second view mode includes a case of fully exposing the screen.

4. The method of claim 3, further comprising:
adjusting the exposed size of the screen by controlling the motor in the first view mode; and
changing a position of the video displayed on the screen.

5. The method of claim 4, further comprising:
counting a use time in the first view mode; and
counting a use time in the second view mode.

6. The method of claim 5, wherein a reference time for performing afterimage compensation in the first view mode is shorter than a reference time for performing the afterimage compensation in the second view mode.

7. The method of claim 6, wherein the screen comprises an OLED.

8. A TV having a variable exposed size of a screen, the TV comprising:
a sensor configured to sense at least one user,
a display configured to display a video in color based on sensing the at least one user while displaying the video in black-and-white in a first view mode, and
a controller configured to lower a brightness of the video and display the video in the black-and-white again based on failing in sensing the at least one user.

9. The TV of claim 8, further comprising a motor configured to adjust the screen to change the first view mode to a second view mode based on sensing the at least one user consecutively.

10. The TV of claim 9, wherein the first view mode includes a case of partially exposing the screen and wherein the second view mode includes a case of fully exposing the screen.

11. The TV of claim 10, wherein in the first view mode, the controller is configured to adjust an exposed size of the screen by controlling the motor and change a position of the video displayed on the screen.

12. The TV of claim 11, wherein the controller counts a use time in the first view mode and a use time in the second view mode.

13. The TV of claim 12, wherein a reference time for performing afterimage compensation in the first view mode is shorter than a reference time for performing the afterimage compensation in the second view mode.

14. The TV of claim 13, wherein the screen comprises an OLED.
